# EUROPÄISCHE PATENTANMELDUNG

(11) **EP 4 575 274 A1**
(43) Veröffentlichungstag der Anmeldung: **25.06.2025**
(21) Anmeldenummer: 23219367.2
(22) Anmeldetag: 21.12.2023
(51) Int. Cl.: F16J 9/12, F04B 39/04, F16J 9/14, F16J 15/56, F16J 9/20

(54) **DICHTELEMENT ZUM ABDICHTEN EINES BAUTEILS EINES KOLBENVERDICHTERS UND KOLBENVERDICHTER**

(71) Anmelder: Burckhardt Compression AG, 8404 Winterthur (CH)
(72) Erfinder: DE LAPERSONNE, Pascal, 8405 Winterthur (CH)
(74) Vertreter: Hepp Wenger Ryffel AG

(57) **Zusammenfassung**

Dichtelement (1) zum Abdichten einer Gleitfläche eines Kolbenverdichters (100), das Dichtelement (1) umfassend einen ringförmigen Körper (2) mit mindestens einem in Umfangsrichtung (U) des ringförmigen Körpers (2) verlaufenden Ringsegment und mit einem ersten Ende (2a) und einem zweiten Ende (2b), wobei der ringförmige Körper (2) eine obere Ringflanke (3), welche im erfindungsgemässen Gebrauch des Dichtelements (1) dem Verdichtungsraum (V) des Kolbenverdichters (1) zugewandt ist, eine untere Ringflanke (4), eine mit der abzudichtenden Gleitfläche in Anlage bringbare Lauffläche (5), sowie eine zur Lauffläche (5) radial gegenüberliegende Umfangsfläche (6), wobei der ringförmige Körper (2) mindestens eine Radialbohrung (7) aufweist, welche die Lauffläche (5) und die zur Lauffläche radial gegenüberliegend angeordnete Umfangsfläche (6) fluidisch verbindet, wodurch die Lauffläche (5) in axialer Richtung (A) in eine druckentlastete Teilfläche (5a) und eine dichtende Teilfläche (5b) unterteilt wird.

## Beschreibung

Die vorliegende Erfindung betrifft ein Dichtelement zum Abdichten eines Kolbens und/oder einer Kolbenstange eines Kolbenverdichters sowie einen Kolbenverdichter umfassend wenigstens ein Dichtelement wie hierin beschrieben.

Das Einsatzgebiet der Erfindung erstreckt sich auf Kolbenverdichter, insbesondere auf als Kolbenringe oder Kolbenstangendichtungen ausgebildete Dichtelemente zur Verwendung in einer Kolben-Zylinder-Anordnung bzw. Kolbenstangenpackung.

Die WO 2006/071344 A1 offenbart eine gattungsgemässe Kolben-Zylinder-Anordnung umfassend einen Kolben mit Ringnut sowie einen darin angeordneten Kolbenring. Der Kolbenring ist in Form einer offenen Ringfeder ausgebildet und besitzt einen rechteckigen Querschnitt. Im montierten Zustand bildet der Kolbenring mit seinen beiden einander zugewandten freien Enden einen gasdichten Stoss. Die Lauffläche liegt im montierten Zustand lichtspaltdicht an der Zylinderwand an und drückt mit vorgegebenem Radialdruck gegen den Zylinder. Der Kolbenring ist über den gemeinsam mit der Ringnut im Kolben gebildeten Spalt rückwärtig vom im Verdichtungsraum herrschenden Gasdruck beaufschlagt, sodass die im eingebauten Zustand radial wirkende Federkraft im Betrieb durch den auch hinter dem Kolbenring herrschenden Gasdruck verstärkt wird. Die auftretende Flächenpressung ist insgesamt also abhängig vom Verdichtungsdruck und die Dichtwirkung nimmt mit zunehmender Ringhöhe zu. Aufgrund von Reibung steigt das Temperaturniveau im Zylinder jedoch mit zunehmender Ringhöhe bzw. Kontaktfläche der Gegenlaufpartner, insbesondere bei trockenlaufenden, d.h. nicht ölgeschmierten, Kolbenverdichtern. Dies kann sich negativ auf die Energieeffizienz und den Verschleiss bzw. die Standzeit der Kolben-Zylinder-Anordnung auswirken. Im Ergebnis weist ein solcher Kolbenring wegen des hohen reibungsbedingten Verschleisses lediglich über eine relativ kurze Zeit eine zufriedenstellende Dichtwirkung auf. Beim Vorhandensein von im Stand der Technik an sich bekannten, weiteren Vorspannelementen, wie z.B. radial innen oder aussen an einem ringförmigen Dichtelement angeordnete Schlauchfedern oder Spannringen, zur Kompensation des reibungsbedingten Materialverlustes reduziert ein solcher Kolbenring zudem nicht die Gefahr, dass vom Bruchversagen der Dichtelemente oder deren Vorspannelemente herrührende Teile in den Verdichtungsraum gelangen und dort kritische Komponenten, wie beispielsweise das Druckventil, beschädigen oder zumindest in ihrer Funktion beeinträchtigen können.

Aus der WO 2016/058800 A1 geht ein Kolbenring hervor, der bei einer hohen Dichtwirkung eine minimale Reibung verursachen soll. Der darin offenbarte Kolbenring weist im Bereich der radial umlaufenden Aussenfläche eine Ausnehmung auf, die bezüglich des Drucks im Kompressionsraum des Zylinders druckausgeglichen ist. Die Kontaktfläche des Kolbenrings zur Innenwandung des Zylinders ist somit nicht mehr durch die gesamte axiale Höhe des Kolbenrings bestimmt, sondern ist um den Differenzbetrag der umlaufenden Ausnehmung geringer. Anders ausgedrückt ist die an den Zylinder zur Anlage kommende, radial umlaufende Aussenfläche des Kolbenrings kleiner ist als die radial gegenüberliegende Innenfläche des Kolbenrings. Die Flächenpressung im Bereich der verkleinerten Aussenfläche entspricht jedoch der Flächenpressung des Kolbenrings gemäss des oben erläuterten Standes der Technik. Obwohl durch die verkleinerte angepresste Aussenfläche die Reibung und damit das Temperaturniveau im Zylinder sinkt, wodurch die Lebensdauer der beteiligten Komponenten verlängert wird, weisst dieser Kolbenring gleichwohl den Nachteil auf, dass der Kolbenring mit abnehmender Kontaktfläche zwischen Kolbenring und Zylinderinnenwand zunehmend weniger stabil an dieser geführt wird, d.h. die Neigung des Kolbenrings zum Verkippen wird dadurch erhöht. Ein Verkippen des Kolbenrings in seiner Ringnut führt in der Regel dazu, dass an seiner Lauffläche ein ungeleichmässiger Verschleiss auftritt, beispielsweise eine fortschreitende Abrundung der zwischen der Lauffläche und der oberen bzw. unteren Ringflanke befindlichen Ringkanten. Dadurch kommt es letztlich zu einer inhomogenen Verteilung des Anpressdrucks und einem ungleichmässigen Materialabtrag am Dichtelement. Darüber hinaus bietet die Ausnehmung dieses Kolbenrings auch keinen wirksamen Schutz des Verdichtungsraums oder der Dichtungsanordnung des betreffenden Kolbenverdichters vor vom Bruchversagen der Dichtelemente oder deren Spannelemente herrührender Teile.

Ausgehend von dem genannten Stand der Technik liegt der vorliegenden Erfindung die Aufgabe zugrunde, solche und weitere Nachteile des Standes der Technik zu beheben und insbesondere ein Dichtelement der eingangs genannten Art bereitzustellen, welches eine Schutzfunktion für den Verdichtungsraum und/oder weitere, dem Dichtelement vor- und nachgelagerte, insbesondere dem Dichtelement kurbeltriebseitig nachgelagerte, Dichtelemente ausübt und vorteilhaftere Betriebseigenschaften aufweist, insbesondere Einsetzbarkeit bei hohen Differenzdrücken, geringen Verschleiss, und geringen Kaltfluss. Unter einem hohen Differenzdruck wird im Rahmen der vorliegenden Erfindung insbesondere ein Differenzdruck von 450 bar oder mehr verstanden.

Der Erfindung liegt ferner die Aufgabe zugrunde, einen Kolbenverdichter mit vorteilhafteren Betriebseigenschaften anzugeben.

Die Aufgabe wird durch ein Dichtelement sowie einen Kolbenverdichter umfassend zumindest ein solches Dichtelement gemäss den unabhängigen Patentansprüchen gelöst. Vorteilhafte Ausgestaltungen und Weiterbildungen sind Gegenstand der abhängigen Ansprüche.

Insbesondere wird die Aufgabe durch ein Dichtelement zum Abdichten einer Gleitfläche eines Kolbenverdichters gelöst. Das Dichtelement umfasst einen ringförmigen Körper mit einer oberen Ringflanke, welche im erfindungsgemässen Gebrauch des Dichtelements dem Verdichtungsraum des Kolbenverdichters zugewandt ist, einer unteren Ringflanke, einer mit der abzudichtenden Gleitfläche in Anlage bringbare Lauffläche, einer zur Lauffläche radial gegenüberliegende Umfangsfläche, sowie einer in axialer Richtung gemessenen Höhe. Die Höhe entspricht dem Abstand zwischen der oberen Ringflanke und der unteren Ringflanke. Der ringförmige Körper weist ferner mindestens eine Radialbohrung auf, welche die Lauffläche und die zur Lauffläche radial gegenüberliegend angeordnete Umfangsfläche fluidisch verbindet. Die Lauffläche weist mindestens eine Druckentlastungsnut auf, welche in Umfangsrichtung des ringförmigen Körpers vollständig umlaufend ausgebildet ist und in welcher mindestens eine der die Lauffläche und die zur Lauffläche radial gegenüberliegend angeordnete Umfangsfläche fluidisch verbindenden Radialbohrungen mündet. Dadurch wird die Lauffläche in axialer Richtung in eine druckentlastete Teilfläche und eine dichtende Teilfläche unterteilt, wobei, die mindestens eine Druckentlastungsnut in der druckentlasteten Teilfläche angeordnet ist/sind.

Ein solches Dichtelement liegt grundsätzlich mit seiner gesamten Lauffläche an der Gleitfläche des Gegenlaufpartners an und wird daher besonders stabil und zuverlässig an dieser geführt, weist jedoch aufgrund der druckentlasteten Teilfläche eine reduzierte Reibung und damit insgesamt ein vorteilhafteres Verschleissverhalten als die bekannten Dichtelemente auf. Es ist insbesondere auch für die Verdichtung leichter Gase wie Wasserstoff auf hohe Drücke, beispielsweise auf über 450 bar, geeignet. Darüber hinaus können Bruch- oder Fremdkörper wirksam in der umlaufenden Druckentlastungsnut zurückgehalten werden, sodass diese nicht in den Verdichtungsraum und/oder die umliegenden Dichtelemente einer Kolbendichtung oder Kolbenstangenpackung gelangen können, wo diese Bruch- oder Fremdkörper zu einer Beschädigung der beteiligten Komponenten führen könnten.

Im Rahmen der vorliegenden Erfindung wird unter dem Begriff "Axialrichtung" die Richtung der sich durch die zentrale Ausnehmung des ringförmigen Dichtelements erstreckenden Rotationsachse verstanden.

Die druckentlastete Teilfläche stellt den sich in Axialrichtung des Dichtelements erstreckenden, druckentlasteten Abschnitt des Dichtelements dar, welcher sich von der zum Verdichtungsraum am entferntesten angeordneten Druckentlastungsnut in Richtung der oberen Ringflanke erstreckt. Entsprechend stellt die dichtende Teilfläche den dichtenden Abschnitt des Dichtelements dar, welcher sich von der zum Verdichtungsraum am entferntesten angeordneten Druckentlastungsnut in Richtung der unteren Ringflanke erstreckt.

Bei der durch das Dichtelement abzudichtenden Gleitfläche kann es sich insbesondere um eine Zylinderinnenwand oder eine Kolbenstange eines Kolbenverdichters handeln, wie nachfolgend noch detailliert ausgeführt wird.

In einer bevorzugten Ausführungsform weist der ringförmige Körper des Dichtelements mindestens ein in Umfangsrichtung des ringförmigen Körpers verlaufendes Ringsegment mit einem ersten Ende und einem zweiten Ende auf. Die beiden Enden des Ringsegments stellen dabei einen überlappenden Ringstoss bereit. Vorzugsweise ist der überlappende Ringstoss als schräger Stoss, gasdichter Stoss oder verhakter Stoss ausgebildet. Dadurch weist der ringförmige Körper keine durchgängigen Spalte oder durchgängige Stösse auf, was insbesondere bei der Verdichtung sehr leichter Gase wie beispielsweise Wasserstoff zu einer erheblichen Reduzierung der Leckgasmenge bei hohen Drücken und zu einer Verbesserung der Fördermengenrate führt. Ein mehrteiliger Aufbau des ringförmigen Körpers aus mehreren Ringsegmenten ist dabei insbesondere bei kleinen Kolbendurchmessern bzw. bruchgefährdeten Werkstoffen vorteilhaft, wobei in diesem Fall die beiden Enden eines Ringsegments jeweils mit einem Ende eines angrenzenden Ringsegments einen überlappenden Ringstoss bereitstellen.

Vorzugsweise ist der ringförmige Körper des Dichtelements aus einem Kunststoff wie Polytetrafluorethylen (PTFE), Perfluoralkoxy-Copoylmer (PFA), einem modifizierten Hochtemperatur-Polymer wie Polyetheretherketon (PEEK), Polyetherketon (PEK), Polyimid (PI), Polyphenylensulfid (PPS), Polybenzimidazol (PBI), Polyamidimid (PAI), oder einem modifizierten Epoxidharz gefertigt.

Zur Erzielung von guten Trockenlaufeigenschaften können die vorstehend aufgelisteten Kunststoffe mit Festschmierstoffen wie PTFE, Graphit oder Molybdändisulfid modifiziert werden.

In einer ersten bevorzugten Ausführungsform ist das Dichtelement als Kolbenstangendichtung ausgestaltet. In diesem Fall wird die Lauffläche von der radial innen liegende Umfangsfläche des ringförmigen Körpers gebildet. Dabei ist die Lauffläche zur Anlage an einer Kolbenstange ausgestaltet, welche somit abdichtbar ist.

Vorzugsweise ist bei dem als Kolbenstangendichtung ausgestalteten Dichtelement an der zur Lauffläche radial gegenüberliegenden Umfangsfläche eine Zugfedereinrichtung zur Erzeugung einer nach innen gerichteten Vorspannung angeordnet. Dadurch lässt sich sicherstellen, dass die Kolbenstangendichtung an der abzudichtenden Kolbenstange anliegt, selbst wenn sich die Kolbenstange nicht bewegt bzw. wenn die Kolbenstangendichtung nicht durch einen Gasdruck an die Kolbenstange angepresst wird. Ausserdem kann durch die von der Zugfedereinrichtung erzeugte Vorspannung der an der Lauffläche des Dichtelements auftretende Verschleiss kompensiert werden, zumindest bis zu einem gewissen Grad.

In einer zweiten bevorzugten Ausführungsform ist das Dichtelement als Kolbendichtung, auch Kolbenring genannt, ausgestaltet. In dieser zweiten Ausführungsform wird die Lauffläche von der radial aussen liegende Umfangsfläche des ringförmigen Körpers gebildet. Die Lauffläche ist dabei dem Verlauf einer Zylinderinnenwand eines Zylinders, in welchem die Kolbendichtung im Gebrauch läuft, angepasst ausgestaltet. Somit ist der zwischen einem hin- und hergehenden Kolben und der Zylinderinnenwand existierende Spalt abdichtbar.

Vorzugsweise ist bei dem als Kolbendichtung ausgestalteten Dichtelement an der zur Lauffläche radial gegenüberliegenden Umfangsfläche ein Spannring zur Erzeugung einer nach aussen gerichteten Vorspannung angeordnet. Dadurch lässt sich sicherstellen, dass die Kolbendichtung an der abzudichtenden Zylinderinnenwand anliegt, selbst wenn sich der Kolben nicht bewegt bzw. wenn die Kolbendichtung nicht durch einen Gasdruck an die Zylinderinnenwand angepresst wird. Ausserdem kann durch die vom Spannring erzeugte Vorspannung der an der Lauffläche des Dichtelements auftretende Verschleiss kompensiert werden, zumindest bis zu einem gewissen Grad.

In einer bevorzugten Ausführungsform des Dichtelements ist der ringförmige Körper einstückig ausgebildet. Dadurch lässt sich das Dichtelement mechanisch belastbarer und durch die vereinfachte Konstruktion auch kostengünstiger herstellen.

In einer bevorzugten Ausführungsform des Dichtelements ist die Lauffläche über einen ersten Abschnitt der axialen Höhe des ringförmigen Körpers als zylinderförmiger Steg ausgebildet. An den Steg schliesst sich über einen weiteren Abschnitt der axialen Höhe des ringförmigen Körpers eine gerade Fase an. Die Fase verläuft in Richtung der zur Lauffläche radial gegenüberliegenden Umfangsfläche und zur oberen Ringflanke hin. Die sich an den Steg anschliessende Fase kann sich dabei insbesondere über den verbleibenden Teil, bezogen auf die gesamte axiale Höhe des ringförmigen Körpers, erstrecken. Eine solche Ausgestaltung stellt für das Dichtelement eine ebene Führungsfläche sowie eine Keilfläche bereit. Die im Vergleich zu gesamten axialen Höhe des Dichtelements kleinere Führungsfläche bewirkt, dass die mit der abzudichtenden Fläche in Kontakt stehende Fläche reduziert wird, wobei die kleinere Reibfläche zu einer geringeren Wärmeentwicklung und zu geringeren Reibungsverlusten führt. Durch die Keilfläche lässt sich im Betrieb des Kolbenverdichters eine Klemmwirkung des Dichtelements in der das Dichtelement beherbergenden Nut erzielen, welche eine radiale Fixierung des Dichtelements in seiner Anschlagposition und damit einen minimalen Spalt zwischen der Lauffläche des Dichtelements und der abzudichtenden Fläche gewährleistet. Diese nachfolgend noch näher beschriebene Klemmwirkung hilft auch dabei, eine Flatterbewegung des Dichtelements in seiner Nut zu vermeiden, was zu einem reduzierten Verschleiss des Dichtelements und zu einer geringeren Gasleckage sowie zu einer verlängerten Standzeit des Dichtelements führt.

Der Begriff "axiale Höhe" meint im Rahmen der vorliegenden Erfindung die Ausdehnung, d.h. Länge, in Axialrichtung.

Vorzugsweise weist der Steg eine axiale Höhe zwischen 4 mm und 15 mm auf. Zusätzlich oder alternativ dazu beträgt der Fasenwinkel der Fase zwischen 10° und 20°. Die vorstehend genannten Angaben wurden als besonders geeignete bzw. optimierte Parameter gefunden.

In einer weiteren bevorzugten Ausführungsform des Dichtelements umfassend eine Fase ist zwischen der oberen Ringflanke und der zur Lauffläche radial gegenüberliegenden Umfangsfläche eine zweite Fase ausgebildet. Der Fasenwinkel der zweiten Fase beträgt dabei vorzugsweise zwischen 40° und 50°.

In einer bevorzugten Ausführungsform des Dichtelements weist die Druckentlastungsnut einen V-förmigen Querschnitt auf. Druckentlastungsnuten mit V-förmigem Querschnitt lassen sich besonders einfach und effizient herstellen, bei gutem Rückhaltevermögen von vom Bruchversagen der Dichtelemente oder deren Spannelementen herrührender Teile oder von sonstigen Fremdkörpern.

In einer bevorzugten Ausführungsform ist die Druckentlastungsnut des Dichtelements über drei Radialbohrungen fluidisch mit der zur Lauffläche radial gegenüberliegend angeordneten Umfangsfläche verbunden. Die Radialbohrungen sind dabei vorzugsweise gegenseitig um 120° versetzt angeordnet, wodurch sich bei einem geringen konstruktiven und herstellungstechnischen Aufwand in Umfangsrichtung des Dichtelements eine relativ gleichmässige Druckverteilung erzielen lässt.

Sofern nichts gegenteiliges angegeben ist, können sich die hierin beschriebenen, bevorzugten Ausführungsformen eines Dichtelements sowohl auf eine Kolbenstangendichtung gemäss der ersten bevorzugten Ausführungsform als auch auf eine Kolbendichtung gemäss der zweiten bevorzugten Ausführungsform beziehen.

Die Aufgabe wird weiter durch eine Kolben-Zylinder-Anordnung umfassend einen Zylinder mit einer Zylinderinnenwand und einem im Zylinder geführten Kolben gelöst, wobei der Kolben mindestens ein in einer Ringnut des Kolbens untergebrachtes und als Kolbendichtung ausgebildetes Dichtelement wie hierin beschrieben umfasst. Die Kolbendichtung wirkt dabei dichtend mit der Zylinderinnenwand zusammen und die radial innen liegende Umfangsfläche des ringförmigen Körpers begrenzt einen vom Gasdruck im Verdichtungsraum des Zylinders beaufschlagbaren Raum der Ringnut. Der Abschnitt der Lauffläche, welcher sich von der in axialer Richtung am entferntesten von dem Verdichtungsraum angeordneten Druckentlastungsnut in Richtung der oberen Ringflanke erstreckt, ist bezüglich des Gasdrucks im Verdichtungsraum druckausgeglichen, sodass die sich im erfindungsgemässen Gebrach der Kolbendichtung gegen die Zylinderinnenwand einstellende Flächungpressung kleiner ist als die mit der Zylinderinnenwand in Anlage bringbare Lauffläche des ringförmigen Körpers.

Die vorstehend beschriebene Kolben-Zylinder-Anordnung kann dabei insbesondere in einem trockenlaufenden Kolbenverdichter angeordnet sein.

Eine solche Kolben-Zylinder-Anordnung weist die bereits zu den erfindungsgemässen Dichtelementen angeführten Vorteile auf und zeichnet sich insbesondere dadurch aus, dass die Kolbendichtung gut an der Zylinderinnenwand geführt wird und somit weniger zum Verkippen neigt, was zu einem schnelleren Verschleiss führen würde. Durch die Druckentlastung eines Teils der mit der Zylinderinnenwand in Anlage bringbaren Fläche der Kolbendichtung wird sowohl der Reibungswiderstand zwischen Kolbendichtung und Zylinderinnenwand als auch die aufgrund der Reibung auftretende thermische Belastung dieser Gegenlaufpartner reduziert.

Vorzugsweise ist die in der Kolben-Zylinder-Anordnung enthaltene Kolbendichtung mit zumindest einer Fase ausgestaltet. In dieser Ausführungsform weist die Ringnut eine entsprechend der Fase der Kolbendichtung ausgebildete Keilfläche auf, sodass die Kolbendichtung als gefangener Kolbenring ausgebildet ist. Das Prinzip des gefangenen Kolbenrings zielt darauf ab, diesem in radialer Richtung den Verschleissweg so zu begrenzen, dass sich seine Dichtfunktion von der eines klassischen Reibrings in die einer berührungsfreien Spaltdichtung ändert. Hierzu wird üblicherweise der Querschnitt des Kolbenrings derart gestaltet, dass dieser nach Überwindung eines vorgegebenen Einlaufverschleisswegs formschlüssig an zumindest einer Kammerwand zu liegen kommt und so einen weiteren Materialabtrag verhindert. Anders ausgedrückt ergibt sich durch die Keilfläche im Betrieb des Kolbenverdichters ein Formschluss zwischen der Kolbendichtung und dem Kammerring, der eine radiale Fixierung der Kolbendichtung in seiner Anschlagposition und damit einen minimalen Spalt zwischen der Lauffläche der Kolbendichtung und der Zylinderinnenfläche gewährleistet, wodurch neben der Verhinderung eines weiteren Materialabtrags auch eine Flatterbewegung der Kolbendichtung in der Ringnut vermieden wird.

Die Aufgabe wird ferner durch einen Kolbenverdichter mit mindestens einem Dichtelement wie vorhergehend beschrieben gelöst.

Ein solcher Kolbenverdichter weist im Wesentlichen dieselben Vorteile auf, wie sie zu den hierin beschriebenen Dichtelementen und/oder Kolben-Zylinder-Anordnung dargelegt wurden.

Nachfolgend werden verschiedene Ausführungsformen der Erfindung anhand von Zeichnungen exemplarisch beschrieben, wobei gleiche oder entsprechende Elemente grundsätzlich mit gleichen Bezugszeichen versehen sind. Es zeigen:
- Fig. 1: Perspektivische Ansicht einer Ausführungsform des erfindungsgemässen Dichtelements;
- Fig. 2a: Draufsicht auf das Dichtelement aus Fig. 1;
- Fig. 2b: Radialschnitt durch das Dichtelement aus Fig. 1 entlang der Linie "B-B" in Fig. 2a;
- Fig. 2c: Querschnitt durch das Dichtelement aus Fig. 1 entlang der Linie "C-C" in Fig. 2b;
- Fig. 3a: Ausschnitt "X" aus Fig. 2b in einer Detailansicht;
- Fig. 3b: Ausschnitt "Y" aus Fig. 2b in einer Detailansicht;
- Fig. 4: Kolben-Zylinder-Anordnung umfassend ein erfindungsgemässes Dichtelement im Radialschnitt.

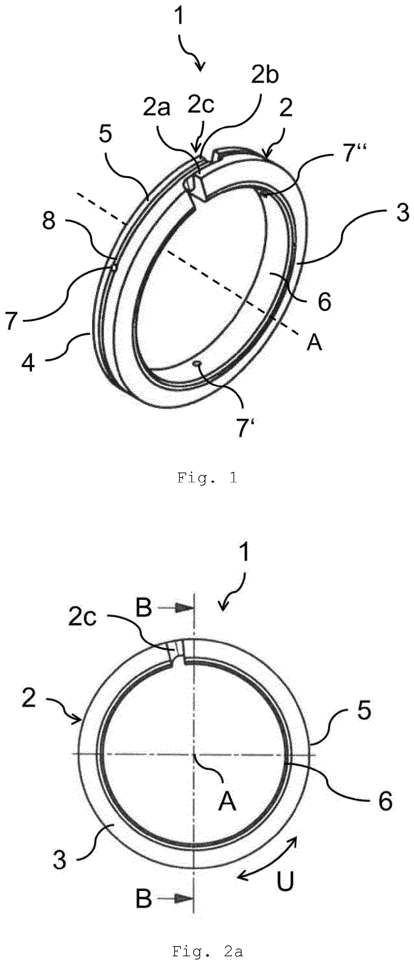

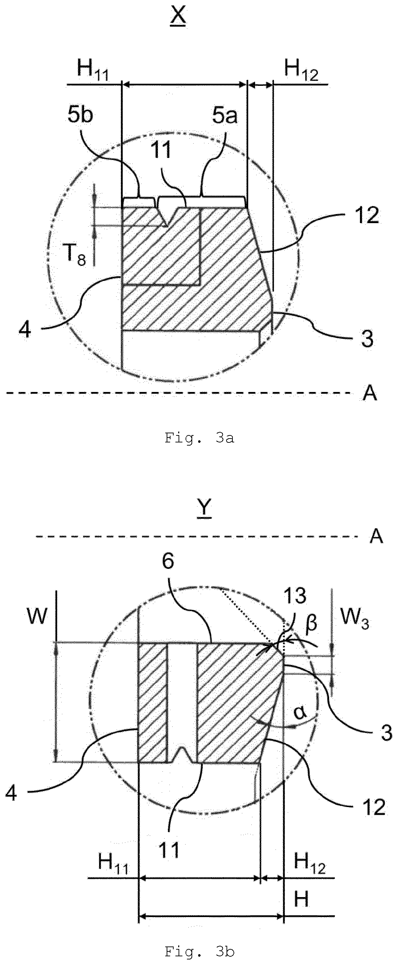

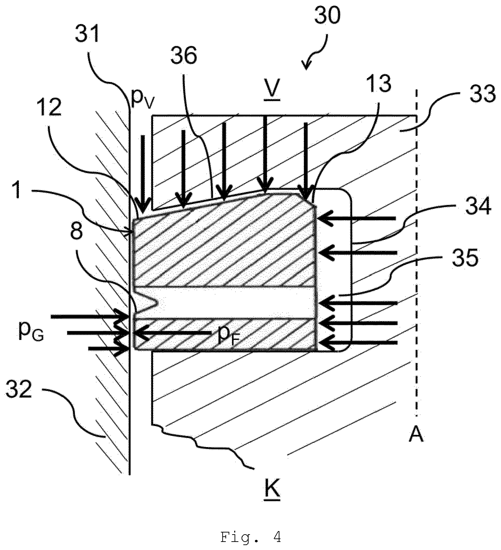

Figur 1 zeigt eine Ausführungsform des erfindungsgemässen Dichtelements. Das in Fig. 1 dargestellte Dichtelement 1 ist als Kolbendichtung ausgestaltet und umfasst einen ringförmigen Körper 2 mit einer sich durch die zentrale Ausnehmung des ringförmigen Körpers erstreckenden Axialrichtung A (angedeutet durch die gestrichelte Linie in Fig. 1). Der ringförmige Körper 2 besitzt im dargestellten Ausführungsbeispiel genau ein in Umfangsrichtung des ringförmigen Körpers 2 verlaufendes Ringsegment mit einem ersten Ende 2a und einem zweiten Ende 2b. Die beiden Enden 2a, 2b stellen dabei einen überlappenden Ringstoss 2c bereit. Der ringförmige Körper 2 besitzt ferner eine obere Ringflanke 3, welche im erfindungsgemässen Gebrauch des Dichtelements 1 der Hochdruckseite zugewandt ist, und eine untere Ringflanke 4. Das Dichtelement 1 umfasst darüber hinaus eine von der radial aussen liegenden Umfangsfläche des ringförmigen Körper 2 gebildete Lauffläche 5, welche dem Verlauf einer Zylinderinnenwand eines Zylinders (beide nicht gezeigt) angepasst ausgestaltet ist, in welchem das Dichtelement eingesetzt wird, d.h. in welchem die Kolbendichtung im Gebrauch läuft. Das Dichtelement 1 umfasst weiter eine zur Lauffläche 5 radial gegenüberliegende Umfangsfläche 6 sowie drei Radialbohrungen 7, 7', 7", welche die Lauffläche 5 und die zur Lauffläche radial gegenüberliegend angeordnete Umfangsfläche 6 fluidisch miteinander verbinden. Die Lauffläche 5 weist im dargestellten Ausführungsbeispiel genau eine Druckentlastungsnut 8 auf, welche in Umfangsrichtung des ringförmigen Körpers 2 vollständig umlaufend ausgebildet ist und in welcher die die Lauffläche 5 und die Umfangsfläche 6 fluidisch verbindenden Radialbohrungen 7,7',7" münden. Dadurch wird die Lauffläche 5 in axialer Richtung A in eine druckentlastete Teilfläche und eine dichtende Teilfläche unterteilt, wie nachfolgend insbesondere in den Figuren 3a und 4 noch näher beschrieben wird.

Figur 2a zeigt eine Draufsicht auf das in Figur 1 dargestellte Dichtelement 1 aufweisend einen ringförmigen Körper 2 mit einem einzigen, in Umfangsrichtung U des ringförmigen Körpers 2 verlaufenden, Ringsegment mit überlappendem Ringstoss 2c. Das Dichtelement weist eine Lauffläche 5 und eine zu dieser radial gegenüberliegend angeordnete Umfangsfläche 6 auf. In der in Fig. 2a gezeigten Darstellung weist die obere Ringflanke 3 des ringförmigen Körpers 2 zum Betrachter. Die in Fig. 2a angedeutete Ringachse bzw. Axialrichtung A erstreckt sich senkrecht zur Bildebene von Fig. 2a durch die zentrale Ausnehmung des ringförmigen Körpers 2.

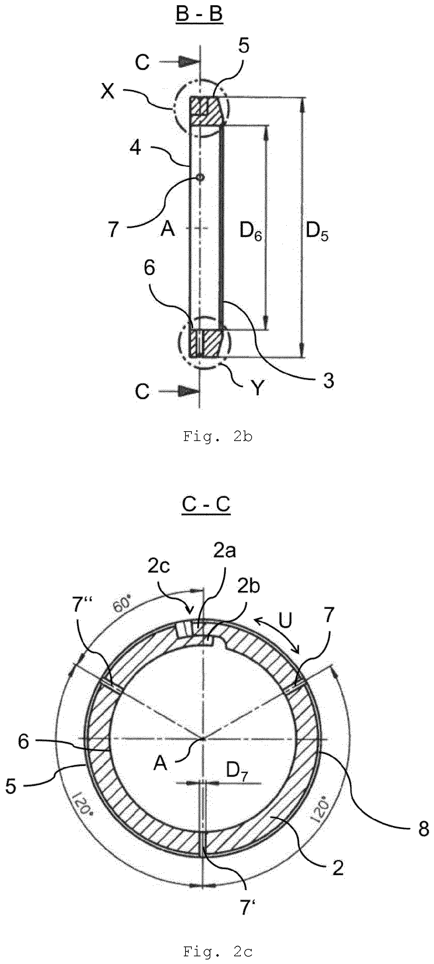

Figur 2b zeigt einen Radialschnitt durch das Dichtelement aus Fig. 1 entlang der Linie "B-B" in Fig. 2a. In Fig. 2b sind neben der oberen Ringflanke 3, der dazu gegenüberliegenden unteren Ringflanke 4, der Lauffläche 5 und der Umfangsfläche 6, welche, bezogen auf die Axialrichtung A, auf der zur Lauffläche 5 radial gegenüberliegenden Seite des ringförmigen Körpers angeordnet ist, auch die Öffnung sowie der Querschnitt jeweils einer der Radialbohrungen 7 des Dichtelements zu sehen. Das Dichtelement weist einen auf die Umfangsfläche 6 bezogenen Durchmesser D₆, welcher im vorliegenden Ausführungsbeispiel etwa 30 mm beträgt, sowie einen auf die Lauffläche 5 bezogenen Durchmesser D₅, welcher im vorliegenden Ausführungsbeispiel etwa 38 mm beträgt, auf. Die in Fig. 2b mit "X" und "Y" bezeichneten Ausschnitte werden in den nachfolgenden Figuren 3a und 3b näher erläutert.

Figur 2c zeigt einen Querschnitt durch das Dichtelement aus Fig. 1 entlang der Linie "C-C" in Fig. 2b. Wie in Fig. 2a erstreckt sich die Axialrichtung A senkrecht zur Bildebene von Fig. 2c durch die zentrale Ausnehmung des ringförmigen Körpers 2. Aus der in Fig. 2c gezeigten Ansicht ist ersichtlich, dass der ringförmige Körper 2 einstückig, d.h. einteilig aus einem einzigen Ringsegment, ausgebildet ist und ein erstes Ende 2a und ein zweites Ende 2b aufweist, wobei die beiden Enden 2a, 2b einen überlappenden Ringstoss 2c bereitstellen. Der gezeigte Querschnitt erstreckt sich dabei durch die Radialbohrungen 7, 7', 7" sowie die in Umfangsrichtung U vollständig umlaufende Druckentlastungsnut 8. Ebenfalls ersichtlich aus der in Fig. 2c dargestellten Ansicht ist, dass die Druckentlastungsnut 8 über drei Radialbohrungen 7, 7', 7" fluidisch mit der zur Lauffläche 5 radial gegenüberliegend angeordneten Umfangsfläche 6 verbunden ist. Die drei Radialbohrungen 7, 7', 7" sind in diesem Ausführungsbeispiel gegenseitig um 120° versetzt angeordnet und weisen jeweils einen Durchmesser D₇ auf, welcher im vorliegenden Ausführungsbeispiel etwa 1 mm beträgt.

Es ist zu beachten, dass bei der Darstellung gemäss Figur 1 ebenso wie in den in den Figuren 2a und 2c gezeigten Ansichten der Spalt des zwischen den beiden Stossenden 2a, 2b gebildeten überlappenden Ringstosses 2c zur Illustration übertrieben gross dargestellt ist.

Figur 3a zeigt Ausschnitt "X" aus Fig. 2b in einer Detailansicht, aus der insbesondere hervorgeht, dass das Dichtelement eine in axialer Richtung A gemessene Höhe H aufweist, welcher dem Abstand zwischen oberer Ringflanke 3 und unterer Ringflanke 4 entspricht. Die Druckentlastungsnut, welche im vorliegenden Ausführungsbeispiel einen V-förmigen Querschnitt und eine Tiefe T₈ von etwa 0,6 mm aufweist, teilt die Lauffläche in axialer Richtung A in eine druckentlastete Teilfläche 5a und eine dichtende Teilfläche 5b. Die Lauffläche ist dabei über einen ersten Abschnitt H₁₁ der axialen Höhe des ringförmigen Körpers als zylinderförmiger Steg 11 ausgebildet. An diesen ersten, sich über die axiale Höhe H₁₁ erstreckenden Abschnitt schliesst sich im vorliegenden Ausführungsbeispiel über einen weiteren Abschnitt H₁₂ der axialen Höhe des ringförmigen Körpers eine gerade Fase 12 an. Die gerade Fase verläuft in Richtung der zur Lauffläche radial gegenüberliegenden Umfangsfläche und zur oberen Ringflanke 3 hin und erstreckt sich im vorliegenden Ausführungsbeispiel über den verbleibenden Teil bezogen auf die gesamte axiale Höhe des ringförmigen Körpers.

Figur 3b zeigt Ausschnitt "Y" aus Fig. 2b in einer Detailansicht, aus der insbesondere die in Radialrichtung zwischen der Lauffläche und der Umfangsfläche 6 gemessene Breite W des ringförmigen Körpers ersichtlich ist. Ferner geht aus Fig. 3b die gesamte axiale Höhe H des ringförmigen Körpers hervor, welche sich im vorliegenden Ausführungsbeispiel aus der axialen Höhe H₁₁ des zylinderförmigen Stegs 11 von etwa 4,9 mm und der axialen Höhe H₁₂ der Fase 12 von etwa 0,9 mm zusammensetzt. Die in axialer Richtung A zwischen der oberen Ringflanke 3 und der unteren Ringflanke 4 gemessene Höhe H beträgt im vorliegenden Ausführungsbeispiel somit etwa 5,8 mm. Der Fasenwinkel α der Fase 12 beträgt im vorliegenden Ausführungsbeispiel etwa 15°. Zwischen der oberen Ringflanke 3 und der zur Lauffläche radial gegenüberliegenden Umfangsfläche 6 ist eine zweite Fase 13 ausgebildet, deren Fasenwinkel β im vorliegenden Ausführungsbeispiel etwa 45° beträgt. Die radiale Breite der oberen Ringflanke W₃, welche nach Abzug der radialen Breite der Fasen 12, 13 von der radialen Breite W übrig bleibt, beträgt im vorliegenden Ausführungsbeispiel etwa 0,6 mm.

Figur 4 zeigt eine Ausführungsform der hierin beschriebenen Kolben-Zylinder-Anordnung 30 umfassend ein als Kolbendichtung ausgestaltetes Dichtelement 1 im Radialschnitt. In dem in Fig. 4 dargestellten Ausführungsbeispiel ist die - im Falle einer Kolbendichtung radial aussen liegenden - Lauffläche über einen ersten Abschnitt der axialen Höhe des Dichtelements 1 als zylinderförmiger Steg ausgebildet, wobei sich an den Steg über den verbleibenden Teil der axialen Höhe des Dichtelements 1 eine gerade Fase 12 anschliesst. Im vorliegenden Ausführungsbeispiel verläuft die Fase 12 von der Lauffläche des ringförmigen Körpers des Dichtelements 1 in Richtung der zur Lauffläche radial gegenüberliegenden - im Falle einer Kolbendichtung entsprechend radial innen liegenden - Umfangsfläche und zur oberen Ringflanke hin, welche im erfindungsgemässen Gebrauch der Kolbendichtung dem Verdichtungsraum V zugewandt ist, hin. Die in Fig. 4 dargestellte Kolbendichtung umfasst zwischen der oberen Ringflanke und der radial innen liegenden Umfangsfläche eine zweite Fase 13. Die Kolben-Zylinder-Anordnung 30 umfasst einen Zylinder 32 mit einer Zylinderinnenwand 31 und einen im Zylinder 32 geführten Kolben 33. Der in Fig. 4 dargestellte Ausschnitt des Kolbens 33 zeigt eine in einer Ringnut 34 des Kolbens 33 untergebrachte Kolbendichtung, welche dichtend mit der Zylinderinnenwand 31 zusammenwirkt. Dabei begrenzt die radial innen liegende Umfangsfläche der Kolbendichtung 1 einen vom Gasdruck p_{V} im Verdichtungsraum V des Zylinders 32 beaufschlagbaren Raum 35 der Ringnut 34. Die Ringnut 34 weist eine entsprechend der Fase 12 der Kolbendichtung 1 ausgebildete Keilfläche 36 auf, sodass die Kolbendichtung 1 als gefangener Kolbenring ausgebildet ist. Der Gasdruck bzw. die daraus resultierenden Kräfte sind in Fig. 4 mit fettgedruckten Pfeilen dargestellt, wobei die Pfeillänge mit der jeweils auftretenden Kraft korreliert. Der Abschnitt der Lauffläche, welcher sich von der in axialer Richtung A am entferntesten vom Verdichtungsraum V angeordneten bzw. der zur Kurbeltriebseite K am nächsten angeordneten Druckentlastungsnut 8 in Richtung des Verdichtungsraums V erstreckt, ist bezüglich des Gasdrucks p_{V} im Verdichtungsraum V druckausgeglichen. Dadurch ist die sich im erfindungsgemässen Gebrauch der Kolbendichtung gegen die Zylinderinnenwand 31 einstellende Flächungpressung p_{F} kleiner als die mit der Zylinderinnenwand 31 in Anlage bringbare Lauffläche.

Es ist zu beachten, dass bei der Darstellung gemäss Figur 4 die zwischen der Kolbendichtung 1 und der Zylinderinnenwand 31 dargestellte Spalt zur besseren Illustration übertrieben gross dargestellt ist.

## Patentansprüche

1. Dichtelement (1) zum Abdichten einer Gleitfläche, insbesondere einer Zylinderinnenwand oder einer Kolbenstange, eines Kolbenverdichters (100), das Dichtelement (1) umfassend einen ringförmigen Körper (2) mit einer oberen Ringflanke (3), welche im erfindungsgemässen Gebrauch des Dichtelements (1) dem Verdichtungsraum (V) des Kolbenverdichters (1) zugewandt ist, einer unteren Ringflanke (4), einer mit der abzudichtenden Gleitfläche in Anlage bringbare Lauffläche (5), einer zur Lauffläche (5) radial gegenüberliegenden Umfangsfläche (6), sowie einer in axialer Richtung (A) gemessenen Höhe (H), wobei die Höhe (H) dem Abstand zwischen oberer Ringflanke (3) und unterer Ringflanke (4) entspricht, und wobei der ringförmige Körper (2) mindestens eine Radialbohrung (7) aufweist, welche die Lauffläche (5) und die zur Lauffläche radial gegenüberliegend angeordnete Umfangsfläche (6) fluidisch verbindet, wobei die Lauffläche (5) mindestens eine Druckentlastungsnut (8) aufweist, welche Druckentlastungsnut (8) in Umfangsrichtung (U) des ringförmigen Körpers (2) vollständig umlaufend ausgebildet ist und in welcher mindestens eine der die Lauffläche (5) und die zur Lauffläche radial gegenüberliegend angeordnete Umfangsfläche (6) fluidisch verbindenden Radialbohrungen (7) mündet, wodurch die Lauffläche (5) in axialer Richtung (A) in eine druckentlastete Teilfläche (5a), in welcher die mindestens eine Druckentlastungsnut (8) angeordnet ist/sind, und eine dichtende Teilfläche (5b) unterteilt wird.

2. Dichtelement (1) nach Anspruch 1, wobei der ringförmige Körper (2) mindestens ein in Umfangsrichtung (U) des ringförmigen Körpers (2) verlaufendes Ringsegment mit einem ersten Ende (2a) und einem zweiten Ende (2b) aufweist, welche Enden (2a, 2b) einen überlappenden Ringstoss (2c) bereitstellen.

3. Dichtelement (1) nach einem der vorhergehenden Ansprüche, ausgestaltet als Kolbenstangendichtung, wobei die Lauffläche (5) von der radial innen liegende Umfangsfläche des ringförmigen Körpers (2) gebildet wird und zur Anlage an einer Kolbenstange (20) ausgestaltet ist.

4. Dichtelement (1) nach Anspruch 3, wobei an der zur Lauffläche radial gegenüberliegenden Umfangsfläche (6) eine Zugfedereinrichtung (9) zur Erzeugung einer nach innen gerichteten Vorspannung angeordnet ist.

5. Dichtelement (1) nach einem der Ansprüche 1 oder 2, ausgestaltet als Kolbendichtung, wobei die Lauffläche (5) von der radial aussen liegende Umfangsfläche des ringförmigen Körpers (2) gebildet wird und die Lauffläche (5) dem Verlauf einer Zylinderinnenwand (31) eines Zylinders (32) angepasst ausgestaltet ist, in welchem die Kolbendichtung im Gebrauch läuft.

6. Dichtelement (1) nach Anspruch 5, wobei an der zur Lauffläche radial gegenüberliegenden Umfangsfläche (6) ein Spannring (10) zur Erzeugung einer nach aussen gerichteten Vorspannung angeordnet ist.

7. Dichtelement (1) nach einem der vorhergehenden Ansprüche, wobei der ringförmige Körper (2) einstückig ausgebildet ist.

8. Dichtelement (1) nach einem der vorhergehenden Ansprüche, wobei die Druckentlastungsnut (8) einen V-förmigen Querschnitt aufweist.

9. Dichtelement (1) nach einem der vorhergehenden Ansprüche, wobei die Druckentlastungsnut (8) über drei Radialbohrungen (7) fluidisch mit der zur Lauffläche radial gegenüberliegend angeordneten Umfangsfläche (6) verbunden ist, welche Radialbohrungen (7) vorzugsweise gegenseitig um 120° versetzt angeordnet sind.

10. Dichtelement (1) nach einem der vorhergehenden Ansprüche, wobei die Lauffläche (5) über einen ersten Abschnitt (H₁₁) der axialen Höhe (H) des ringförmigen Körpers (2) als zylinderförmiger Steg (11) ausgebildet ist, und wobei sich an den Steg (11) über einen weiteren Abschnitt (H₁₂) der axialen Höhe (H) des ringförmigen Körpers (2), insbesondere über den verbleibenden Teil bezogen auf die gesamte axiale Höhe (H) des ringförmigen Körpers (2), eine gerade Fase (12) anschliesst, welche Fase (12) in Richtung der zur Lauffläche radial gegenüberliegenden Umfangsfläche (6) und zur oberen Ringflanke (3) hin verläuft.

11. Dichtelement (1) nach Anspruch 10, wobei der Steg (11) eine axiale Höhe (H₁₁) zwischen 4 mm und 15 mm aufweist und/oder wobei der Fasenwinkel (α) der Fase (12) zwischen 10° und 20° beträgt.

12. Dichtelement (1) nach Anspruch 10 oder 11, wobei zwischen der oberen Ringflanke (3) und der zur Lauffläche radial gegenüberliegenden Umfangsfläche (6) eine zweite Fase (13) ausgebildet ist, wobei der Fasenwinkel (β) der zweiten Fase (13) vorzugsweise zwischen 40° und 50° beträgt.

13. Kolben-Zylinder-Anordnung (30), insbesondere in einem trockenlaufenden Kolbenverdichter, umfassend einen Zylinder (32) mit einer Zylinderinnenwand (31) und einem im Zylinder (32) geführten Kolben (33), wobei der Kolben (33) mindestens eine in einer Ringnut (34) des Kolbens (33) untergebrachte Kolbendichtung (1) nach einem der Ansprüche 5 bis 12 aufweist, welche Kolbendichtung (1) dichtend mit der Zylinderinnenwand (31) zusammenwirkt, wobei die radial innen liegende Umfangsfläche des ringförmigen Körpers (2) einen vom Gasdruck (p_{V}) im Verdichtungsraum (V) des Zylinders (32) beaufschlagbaren Raum (35) der Ringnut (34) begrenzt, und wobei der Abschnitt (5a) der Lauffläche (5), welcher sich von der in axialer Richtung (A) am entferntesten von dem Verdichtungsraum (V) angeordneten Druckentlastungsnut (8) in Richtung der oberen Ringflanke (3) erstreckt, bezüglich des Gasdrucks (p_{V}) im Verdichtungsraum (V) druckausgeglichen ist, sodass die sich im erfindungsgemässen Gebrach der Kolbendichtung (1) gegen die Zylinderinnenwand (31) einstellende Flächungpressung (p_{F}) kleiner ist als die mit der Zylinderinnenwand (31) in Anlage bringbare Lauffläche (5) des ringförmigen Körpers (2).

14. Kolben-Zylinder-Anordnung (30) nach Anspruch 13, wobei die Kolbendichtung (1) nach einem der Ansprüche 10 bis 12 ausgestaltet ist, und wobei die Ringnut (34) eine entsprechend der Fase (12) der Kolbendichtung (1) ausgebildete Keilfläche (36) aufweist, sodass die Kolbendichtung (1) als gefangener Kolbenring ausgebildet ist.

15. Kolbenverdichter (100) mit wenigstens einem Dichtelement (1) gemäss einem der Ansprüche 1 bis 12.
